# EUROPEAN PATENT APPLICATION

(11) **EP 2 503 374 A1**
(43) Date of publication of application: **26.09.2012**
(21) Application number: 12159557.3
(22) Date of filing: 15.03.2012
(51) Int. Cl.: G02B 26/00

(54) **Display using a transreflective electrowetting layer**

(30) Priority: 25.03.2011 US 201113071925
(71) Applicant: Delphi Technologies, Inc., Troy, MI 48007 (US)
(72) Inventor: Kuhlman, Frederick F., Kokomo, IN Indiana 46902 (US); Harbach, Andrew P., Argyle, TX Texas 76226 (US); Berlin, Carl W., West Lafayette, IN Indiana 47906 (US)
(74) Representative: Denton, Michael John

(57) **Abstract**

A display for displaying images that includes a transreflective electrowetting layer operable to a transparent-state where light passes through the transreflective electrowetting layer and a reflective-state where light is reflected by the transreflective electrowetting layer; a non-reflective layer underlying the transreflective electrowetting layer; and an emissive layer proximate to the transreflective electrowetting layer. The display combines light emitting elements such as OLED's with transreflective electrowetting elements to provide a display that can operate in high ambient light conditions without undesirably high power dissipation by the OLED's, and can operate under low ambient light or no ambient light conditions.

## Description

### TECHNICAL FIELD OF INVENTION

The invention generally relates to displays, and more particularly relates to a display that combines a transreflective electrowetting layer and an emissive layer to form a display for operating in high ambient light conditions.

### BACKGROUND OF INVENTION

It has been observed that images displayed on organic light emitting diode (OLED) type displays may be difficult to view during high ambient light conditions such as when the sun is shining brightly. The difficulty is generally attributed to insufficient luminance. Greater luminance is particularly desirable for displays used in automotive applications since the direction of the sun shining on a display is not conveniently changed to improve the situation. It has been proposed to increase current to the OLEDs to provide greater luminance across the OLED display. However this may reduce the reliability of the display by increasing current consumption and temperature of the display. It has also been proposed to add a light polarizer to mitigate sun load reflections. However polarizers reduce overall luminance and are costly.

### SUMMARY OF THE INVENTION

In accordance with one embodiment of this invention, a display for displaying images is provided. The display includes a transreflective electrowetting layer, a non-reflective layer, and an emissive layer. The transreflective electrowetting layer is operable to a transparent-state where light passes through the transreflective electrowetting layer and a reflective-state where light is reflected by the transreflective electrowetting layer. The non-reflective layer underlies the transreflective electrowetting layer. The emissive layer is proximate to the transreflective electrowetting layer. The emissive layer is operable to an on-state where the emissive layer emits light, and an off state where the emissive layer does not emit light. The transreflective electrowetting layer and the emissive layer cooperate to display an image on the display.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is cut-away view of a vehicle equipped with a display in accordance with one embodiment;

Fig. 2 is sectional side view of a pixel used in the display in Fig. 1 in accordance with one embodiment; and

Fig. 3 is sectional side view of a pixel used in the display in Fig. 1 in accordance with one embodiment.

### DESCRIPTION OF THE PREFERRED EMBODIMENTS

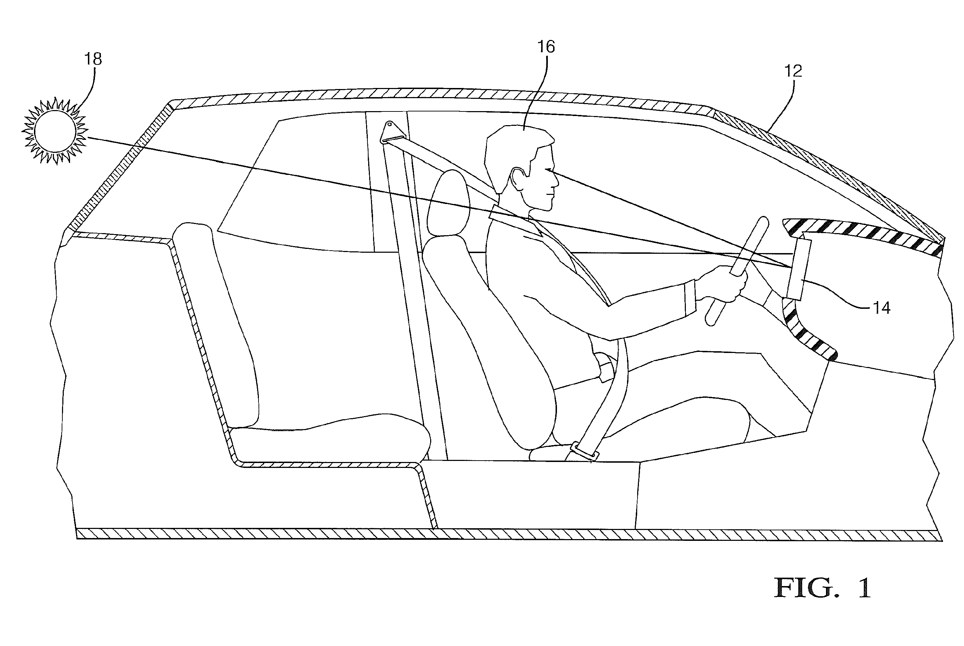

In accordance with an embodiment, Fig. 1 illustrates a vehicle 12 equipped with a display 14 for displaying images to a person viewing the display 14, such as an operator 16. The display 14 is illustrated as part of the vehicle 12 for the purposes of explanation and not limitation. As such, the teachings herein are applicable to other displays such as a personal computer display or personal communication device display. As noted above, some displays are difficult to view when an ambient light source 18, for example the sun, is present. For displays using only direct luminance, such as organic light emitting diode (OLED) type displays, the ambient light source 18 may project enough light onto the display 14 to make viewing by the operator 16 difficult. It is understood that the display 14 is generally formed of an array of a plurality of pixels, and that each of the pixels is generally independently operated to display an image on the display.

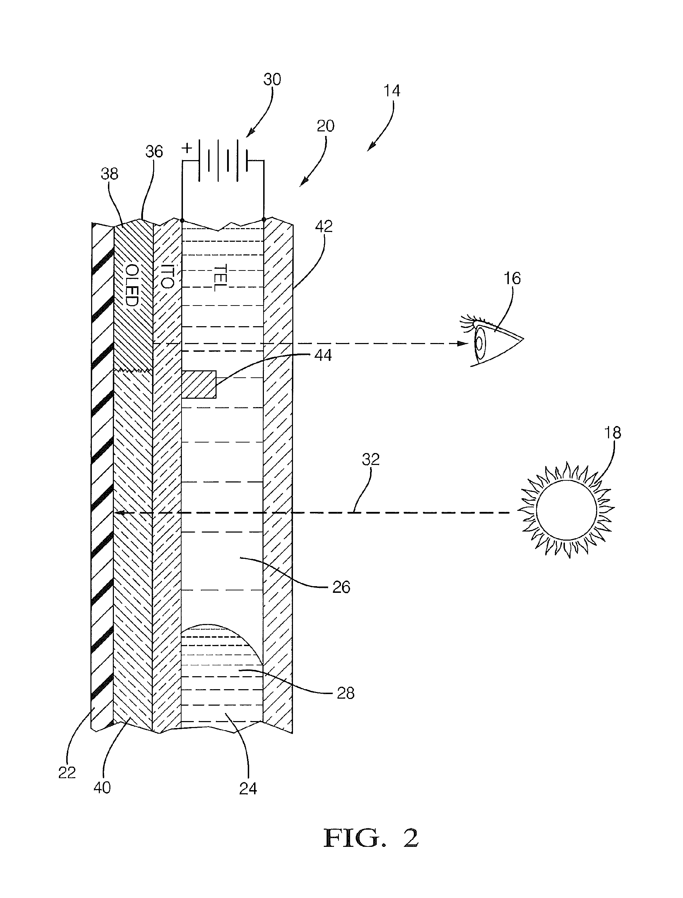

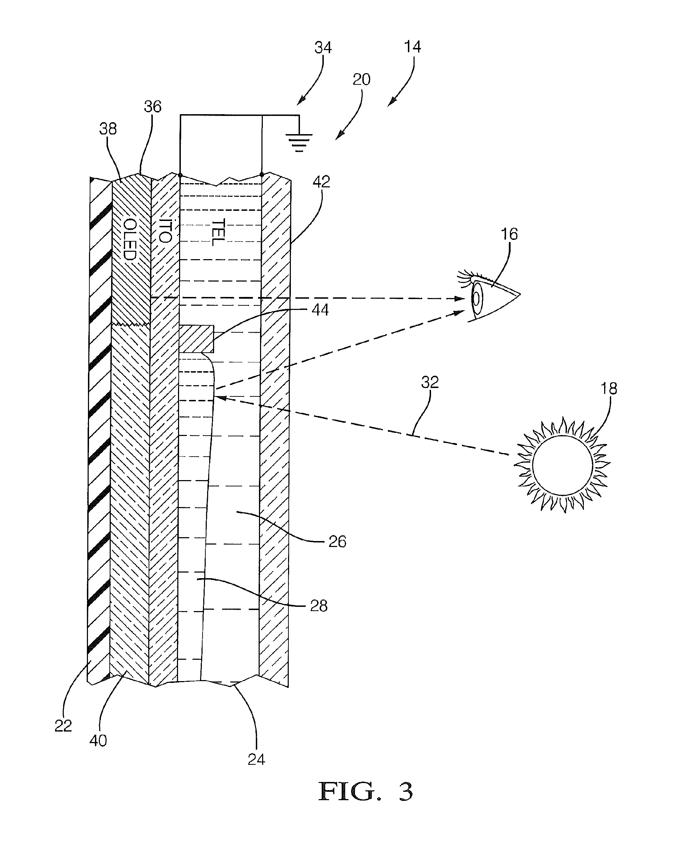

Figs. 2 and 3 illustrate a non-limiting example of an arrangement of various layers forming a portion of a pixel 20 used to form the display 14. The display 14, or more specifically the pixel 20, may include a non-reflective layer 22 configured to absorb light impinging on the non-reflective layer 22. The non-reflective layer 22 may be formed of a material suitable for absorbing light, such as carbon. The non-reflective layer 22 may also serve as an electrical conductor for conducting electricity to other layers forming the pixel 20. The desirability of the non-reflective layer 22 will become apparent in the explanation below. While not specifically illustrated, the arrangement of layers may include other conductor layers such as an indium-tin-oxide (ITO) layer in addition to the non-reflective layer 22 for distributing electric signals about the display 14. All of the layers necessary to form a display 14 or a pixel 20 are not specifically illustrated only for the purpose of simplifying the explanation, but it will be recognized by the skilled practitioner what additional layers are suitable for forming the display 14.

The display 14 and/or the pixel 20 may also include a transreflective electrowetting layer (TEL) 24 overlying the non-reflective layer 22. The TEL 24 is a display element that generally includes a transparent fluid 26 and a reflective fluid 28. The observed operation of the TEL 24 will now be described. If a non-zero voltage 30 is applied across the TEL 24 as illustrated in Fig. 2, the reflective fluid 28 crowds together so ambient light propagating along a light path 32 through the transparent fluid 26 is absorbed by the non-reflective layer 22. As such, the TEL 24 is operable to a transparent state, as illustrate in Fig. 2, wherein light passes through the TEL 24. Otherwise, if a floating short circuit or zero voltage 34 is applied across the TEL 24 as illustrated in Fig. 3, the reflective fluid 28 generally spreads out so ambient light impinging on the TEL 24 is reflected. As such, the TEL 24 is also operable to a reflective state, as illustrated in Fig. 3, wherein light is reflected by the TEL 24. A suitable material for the reflective fluid 28 is Galinstan.

Using electrowetting display technology is advantageous over liquid crystal display (LCD) technology since electrowetting displays do not need light transmission efficiency reducing polarizing filters as does LCD, and so displays using electrowetting display technology may provide brighter displays when compared to LCD type displays. Furthermore, the cost of displays using electrowetting display technology is generally less than LCD type displays.

The display 14 and/or the pixel 20 may also include an emissive layer 36 proximate to the transreflective electrowetting layer (TEL) 24. The arrangement of the emissive layer 36 relative to the TEL 24 shown in Figs. 2 and 3 is a non-limiting example for the purpose of explanation. Other arrangements are possible, some of which will be described below. The emissive layer 36 generally includes a device capable of emitting light, for example and organic light emitting diode (OLED) 38 or an electro-luminescence element. In general, the emissive layer 36 is operable to an on-state wherein the emissive layer 36 emits light, and an off-state wherein the emissive layer 36 does not emit light.

As suggested by Figs. 2 and 3, the OLED 38 may underlay all of the area covered by the TEL 24, and so the emissive layer may include a transparent region for the purpose of leveling the display 14 or pixel 20 to ease the assembly of subsequent layers such as the TEL 24. In one embodiment, the TEL 24 may include a boundary 44 configured to prevent the reflective fluid 28 from spreading over the emissive layer 36 and so blocking light emitted by the OLED 38. In another embodiment the TEL may not include the boundary 44 and so when the zero voltage 34 is applied, the reflective fluid will spread over the emissive layer 36. Then the value of the non-zero voltage may be varied to control the amount of spreading and so variably control the amount of light reflected by the pixel 20, with or without light being emitted by the emissive layer 36. Such a configuration may be advantageous to maximize the amount of ambient light reflected while sacrificing the ability to supplement reflected ambient light with emitted light from the emissive layer 36. In another embodiment not shown, the emissive layer 36 may be laterally displaced from the TEL 24, possible in a co-planer arrangement.

The embodiment described above provides a combination of features that provide an improvement to the display 14 for operating during high ambient light conditions and low ambient light conditions. When the TEL operates to the reflective state during high ambient light conditions, the pixel 20 appears to be lit by the ambient light source 18. Optionally, the OLED 38 may be operated to the on-state in order to supplement light reflected by the TEL 24. By this arrangement, the emissive layer 36 alone does not need to emit sufficient light to be brighter than the ambient light 18 since the light perceived by the operator 16 is a combination of light emitted by the emissive layer 36 and the reflected by the TEL 24. The non-reflective layer 22 is illustrated as extending under the emissive layer since some emissive devices such as OLED's may themselves be transparent or semitransparent, and so if the OLED is in the off-state and so is supposed to appear black, ambient light impinging on the emissive layer 36 is not reflected.

During low ambient light conditions, the TEL 24 may continue to operate, or may be fixed to the reflective state since there is little light to be absorbed by the non-reflective layer 22. However, it may be preferable to operate the TEL to the transparent state during low ambient light conditions so that if the pixel 20 is supposed to appear black, i.e. the OLED is off, the ambient light absorbed by the non-reflective layer. The emissive layer 36 may be independently operated to emit sufficient light by itself for the operator 16 to perceive an image on the display 14. As such, light emitted by the emissive layer 36 and light either reflected by the TEL 24 or absorbed by the non-reflective layer 22 cooperate to display an image on the display 14. In order to maximize the operation of the display 14 over a wide range of ambient light conditions, it may be preferable that the TEL 24 in each pixel 20 is independently operable, and/or the emissive layer 36 in each pixel 20 is independently operable.

In order to provide a display 14 capable of displaying color image, the display 14 may include a color filter, hereafter often filter 42. A typical pixel 20 for a display 14 configured for full color images may include a red filter (R), a green filter (G) and a blue filter (B) for each pixel 20, and each pixel 20 would typically include an independently controlled TEL 24 for each filter (R, G, B) and an independently controlled emissive layer 36. As illustrated in Figs. 2 and 3, the emissive layer 36 is interposed between the non-reflective layer 22 and the transreflective electrowetting layer (TEL) 24. If the emissive layer 36 is configured to emit white light, it may be preferable that the filter extend over the emissive layer 36 so that the white light from the emissive layer 36 and light reflected by the non-reflective layer 22 is colored by the filter 42 as it propagates toward the operator 16.

Accordingly, a display 14 for displaying images is provided. The display combines light emitting elements such as OLED's with transreflective electrowetting elements to provide a display that can operate in high ambient light conditions without undesirably high power dissipation by the OLED's, and can operate under low ambient light or no ambient light conditions.

## Claims

1. A display (14) for displaying images, said display (14) comprising:
a transreflective electrowetting layer (24) operable to a transparent-state where light passes through the transreflective electrowetting layer (24) and a reflective-state where light is reflected by the transreflective electrowetting layer (24);
a non-reflective layer (22) underlying the transreflective electrowetting layer (24); and
an emissive layer (36) proximate to the transreflective electrowetting layer (24), said emissive layer (36) operable to an on-state where the emissive layer (36) emits light, and an off-state where the emissive layer (36) does not emit light, wherein the transreflective electrowetting layer (24) and the emissive layer (36) cooperate to display an image on the display (14).

2. The display (14) in accordance with claim 1, wherein the transreflective electrowetting layer (24) includes an electrowetting element formed of Galinstan.

3. The display in accordance with claim 1, wherein the display is formed of a plurality of pixels (20), and each of said pixels (20) includes a transreflective electrowetting layer (24), a non-reflective layer (22), and an emissive layer (36).

4. The display (14) in accordance with claim 3, wherein each pixel (20) includes a color filter (42).

5. The display (14) in accordance with claim 1, wherein the emissive layer (36) is laterally displaced from the transreflective electrowetting layer (24).

6. The display (14) in accordance with claim 5, wherein the display further comprises a color filter (42) overlying the transreflective electrowetting layer (24).

7. The display (14) in accordance with claim 5, wherein the display (14) further comprises a color filter (42) overlying the emissive layer (36).

8. The display (14) in accordance with claim 5, wherein the display (14) further comprises a color filter (42) overlying the emissive layer (36) and the transreflective electrowetting layer (24).

9. The display (14) in accordance with claim 1, wherein the emissive layer (36) is interposed between the non-reflective (22) layer and the transreflective electrowetting layer (24).

10. The display (14) in accordance with claim 9, wherein the display (14) further comprises a color filter (42) overlaying the transreflective electrowetting layer (24) opposite the emissive layer (36).

11. The display (14) in accordance with claim 1,2,3,4,9,10, wherein the transmissive electrowetting layer (24) includes a boundary (44) configured to prevent the reflective fluid (28) from spreading over the emissive layer (36) and so blocking light emitted by the OLED (38)

12. The display (14) in accordance with claim 1,2,3,4,9,10, wherein the value of the non-zero voltage can be varied to control the amount of spreading of the reflective fluid (28) and so variably control the amount of light reflected by the pixel (20), with or without light being emitted by the emissive layer (36).
